# EUROPÄISCHE PATENTSCHRIFT

(11) **EP 1 976 313 B1**
(45) Veröffentlichungstag und Bekanntmachung des Hinweises auf die Patenterteilung: **01.12.2010**
(21) Anmeldenummer: 07006675.8
(22) Anmeldetag: 30.03.2007
(51) Int. Cl.: H04W 8/22

(54) **Steuerung mobiler Endgeräte**
Control of mobile terminals
Commande d'un terminal mobile

(43) Veröffentlichungstag der Anmeldung: 01.10.2008
(73) Patentinhaber: Communology GmbH, 50670 Köln (DE)
(72) Erfinder: Kähler, Thomas, 52072 Aachen (DE); Bell, Frank, 50858 Köln (DE)
(74) Vertreter: Walter, Philipe

(56) Entgegenhaltungen:
- EP-A- 1 619 911
- WO-A-00/40049
- DE-A1-102004 049 611
- US-A1- 2003 032 408

## Beschreibung

Die Anmeldung betrifft ein Verfahren zur Steuerung mobiler Endgeräte. Ferner betrifft die Anmeldung ein mobiles Endgerät, ein System mit einem mobilen Endgerät und einem Hintergrundsystem und ein Computerprogramm zur Steuerung eines mobilen Endgerätes.

Mobile Endgeräte für die drahtlose Kommunikation, beispielsweise Mobiltelefone, Smartphones, PDAs (Personal Digital Assistants), mobile Spielekonsolen, mobile Multimediageräte, mobile Kameras mit Kommunikationsfunktionen oder auch andere mobile Kommunikationseinrichtungen weisen heutzutage eine Vielzahl von Funktionen auf. In den letzten Jahren haben durch die stetige und schnelle technische und wirtschaftliche Weiterentwicklung die Funktionen und somit die Komplexität innerhalb der mobilen Endgeräte stetig zugenommen. Dies betrifft nicht nur die Grundtechnologie, beispielsweise die verschiedenen Übertragungsverfahren, wie Beispielsweise GSM, CDMA, WCDMA, UMTS und dergleichen, sondern auch die Programme. Programme können beispielsweise Basissoftwareanwendungen, wie beispielsweise Short Message Service (SMS), Multimedia Message Service (MMS), Wireless Application Protocol (WAP) und dergleichen oder auch Ausführungsplattformen zur Ausführung ergänzender Programme sein. Ausführungsplattformen können beispielsweise Java, J2ME, Symbian C++, Windows Mobile, Brew, Flash Lite, Linux oder dergleichen sein. Andere Betriebssysteme sind ebenfalls Gegenstand der Anmeldung. Neben den Ausführungsplattformen können Programme auch Softwareanwendungen oder Mehrwertdienste sein. Softwareanwendungen oder Mehrwertdienste können beispielsweise Push-to-Talk over Cellular (POC), Instant Messaging (IM), Instant Messaging Presence Services (IMPS), Digital Rights Management (DRM), Streaming, Mobile Television, Mobile Music, Web Browsing oder dergleichen sein.

Das Zurverfügungstellen von den verschiedenen Softwareanwendungen und Mehrwertdiensten führt zu einer erhöhten Komplexität in den Geräten. Netzbetreiber legen verstärkt Wert darauf, dass die zur Verfügung gestellten Softwareanwendungen und Mehrwertdienste reibungslos funktionieren. Um die Kundenzufriedenheit hoch zu halten ist es notwendig, dass die Mobilfunkkunden stets mit funktionierenden Programmen, Diensten und Mehrwertdiensten ausgestattet sind. Für die Netzbetreiber ist es nicht akzeptabel, dass aufgrund von Softwarefehlern Probleme bei der Verwendung der Mehrwertdienste auftreten. Auch ist es aus wirtschaftlichen Gründen nicht gewünscht, dass die Kunden bei jedem Problem mit der Software in einem Kundencenter einen Mitarbeiter mit der Behebung des Problems beauftragen.

Es ist daher wirtschaftlich notwendig, sowohl den Testaufwand für neue als auch für alte Technologien bzw. Programme oder Mehrwertdienste soweit wie möglich zu automatisieren, um die notwendigen Tests überhaupt in angemessener Zeit mit der notwendigen Qualität durchführen zu können. Dieses Kriterium ist insbesondere notwendig, um die Vermarktungszeit (Time to Market) und die Dienstequalität hoch zu halten.

Es ist in der Praxis jedoch zu beobachten, dass eine immer größer werdende Vielzahl von Endgeräten in immer kürzerer Zeit auf den Markt kommt. Auf diesen verschiedenen Endgeräten, die verschiedenste Betriebssysteme zur Verfügung stellen, müssen die von den Netzbetreibern angebotenen Programme oder Mehrwertdienste funktionieren. Außerdem kommt es dazu, dass durch die immer kürzer werdenden Produktzyklen die neuen Geräte mit Softwarefehlern ausgeliefert werden. Diese Softwarefehler verursachen Probleme mit den Mehrwertdiensten und führen zur Verärgerung der Kunden.

Nachteilig ist ferner, dass im Falle neuer Dienste diese auf Anhieb funktionieren müssen, um vom Kunden akzeptiert zu werden. Dienste, die mühsam von Kunden konfiguriert werden müssen und häufig nicht funktionieren, werden von den Kunden schnell abgelehnt und eine Durchsetzung im Markt wird nahezu unmöglich. Daher ist es für die gesamte Wertschöpfungskette notwendig, funktionierende, gut getestete Mehrwertdienste in den Markt zu bringen.

Nicht getestete Mehrwertdienste können zu Abstürzen der Ausführungsplattformen der mobilen Endgeräte führen. Das kann dazu führen, dass die mobilen Endgeräte nicht mehr funktionieren und von den Benutzern nicht mehr benutzt werden können. Dies führt einerseits dazu, dass die Mobilfunkbetreiber bzw. Endgerätehersteller zumeist innerhalb der Gewährleistungsfrist die Geräte reparieren müssen, was zu erheblichen Kosten führt. Andererseits können die Kunden während der Zeit der Reparatur die Geräte nicht nutzen und den Mobilfunkbetreibern entgehen dadurch Gewinne.

Aus den zuvor genannten Gründen führen Mobilfunkbetreiber als auch Endgerätehersteller vielfältige Tests mit den Geräten durch. Dabei werden die Ausführungsplattformen und die Basissoftwareanwendungen geprüft. Außerdem werden die Softwareanwendungen, Programme und Mehrwertdienste ausgiebig getestet.

Hierfür werden beispielsweise manuelle Tests eingesetzt. Bei den manuellen Tests führt ein menschlicher Tester eigenhändig Aktionen durch. Diese Aktionen können beispielsweise das Drücken von Tasten in einer vorbestimmten Abfolge gemäß eines vordefinierten Tests sein. Die durch die Tastendrücke bewirkten Reaktionen auf den Endgeräten werden manuell protokolliert und registriert. Durch das Durchführen der vorgegebenen Testszenarien und Testabläufe ist es möglich, eine Vielzahl von Fehlern auszuschießen. Die manuelle Eingabe der Tasteneingaben gemäß des Testablaufs ist jedoch zeitaufwendig und führt zu hohen Kosten. Aufgrund der begrenzten Test-Ressourcen bei den Herstellern, zulieferern sowie Mobilfunkbetreibern ist es daher nicht möglich, alle Endgeräte komplett durchzutesten.

Es ist auch möglich, dass mit Hilfe eines Roboters eine Abfolge von Tastendrücken programmiert wird. Das mobile Endgerät wird durch den Roboter bedient, indem der Roboter die Tasten gemäß seiner Programmierung drückt. Die durch die Tasten ausgelösten Aktionen und Funktionszustände der Mobiltelefone werden entweder manuell oder automatisch überwacht und protokolliert. Anhand der Testergebnisse lassen sich eventuelle Fehler vermeiden.

Auch ist es bekannt, mit Hilfe von Softwareagenten Softwareanwendungen und Mehrwertdienste zu testen. Hierzu wird vorgeschlagen, die Softwareagenten auf die mobilen Endgeräte zu laden. Die auf die mobilen Endgeräte geladenen Softwareagenten werden in dem Speicher des mobilen Endgeräts gespeichert und durch den Prozessor des mobilen Endgeräts ausgeführt. In dem mobilen Agenten ist ein Testablauf hinterlegt. Bei der Ausführung der Agenten durch den im mobilen Endgerät vorhandenen Prozessor wird die vordefinierte Prozedur durchgeführt. Alle Aktionen der Agenten erzeugen ein Ergebnis, welches durch den Agenten registriert werden kann und beispielsweise automatisch mit einem Sollwert verglichen werden kann. Auch ist es möglich, dass der Agent die Ergebnisse abspeichert und an das Mobilfunknetz überträgt.

Dadurch, dass die Agenten auf den Prozessoren der Mobiltelefone selbst ausgeführt werden, kann es dazu kommen, dass die Agenten die zu testenden Softwareanwendungen und Mehrwertdienste beeinflussen. Beispielsweise ist es möglich, dass bei einem Programmfehler innerhalb des Agenten selbst der Testablauf zu einem Fehler führt. Dieser Fehler liegt jedoch nicht im zu testenden Programm oder Mehrwertdienst selber, sondern im Softwareagent. Für den Softwareagenten ist jedoch nicht zu erkennen, dass dieser den Fehler selbst verursacht hat. In diesem Falle ist es aufwändig und mühsam, herauszufinden, woran der detektierte Fehler liegt.

Darüber hinaus ist es möglich, die Mehrwertdienste und Softwareanwendungen für verschiedene Netzbetreiber automatisch zu konfigurieren. Beispielsweise ist aus der DE 10 2004 049 611 A1 ein Verfahren zur Konfiguration eines mobilen Endgerätes bekannt. Hierbei wird durch ein Teilnehmermodul eine Anforderung von Konfigurationsdaten an ein Hintergrundsystem, beispielsweise ein Mobilfunknetz, beispielsweise ein zellulares Mobilfunknetz, übermittelt. Abhängig von der Anforderung der Konfigurationsdaten werden Konfigurationsdaten von dem Hintergrundsystem an das Endgerät übermittelt und das Endgerät wird entsprechend der Konfigurationsdaten automatisch konfiguriert. Mit Hilfe dieser Konfiguration ist es möglich, die Parameter und/oder die Benutzerschnittstelle der mobilen Endgeräte zu konfigurieren. Die Übermittlung von Konfigurationsdaten eignet sich jedoch nicht dazu, die Funktionalität von Softwareanwendungen oder Mehrwertdiensten zu testen. Darüber hinaus wird gemäß der Lehre dieses Standes der Technik vorgeschlagen, dass die Konfigurationsdaten durch das Mobiltelefon selbst aktiviert werden. Dies kann jedoch dazu führen, dass bei fehlerhaften Konfigurationsdaten die Ausführungsplattform des mobilen Endgerätes gestört wird und somit eine manuelle Konfiguration notwendig wird.

Die Veröffentlichung US 2003/0032408 Al zeigt ein Verfahren zum Erfassen (Logging) von Anwendungsfehlern in mobilen Telefonen. Das dort beschriebene mobile Telefon verfügt über die herkömmlichen Funktionalitäten eines Mobilfunkendgerätes modifiziert durch eine Software, die eine Loggin Funktionalität aufweist. Die Anwendungen als auch die Loggin Funktionalität wird hierbei auf dem Prozessor des Mobilfunkendgerätes ausgeführt. Mit Hilfe eines Sim Application Toolkits (SAT) Programms können Fehlermeldungen des Telefons als auch andere Funktionszustände des Telefons extrahiert werden.

Ausgehend von den aufgezeigten Nachteilen lag der Anmeldung die Aufgabe zugrunde, ein Verfahren, ein mobiles Endgerät, ein System, als auch ein Computerprogramm zur Verfügung zu stellen, welches in einfacher und flexibler Weise eine Übertragung und Ausführung von Steuerbefehlen innerhalb des mobilen Endgeräts ermöglicht.

Die zuvor hergeleitete und aus dem Stand der Technik aufgezeigte Aufgabe wird gemäß eines Gegenstandes der Anmeldung gelöst durch ein Verfahren zur Steuerung eines mobilen Endgeräts nach Anspruch 1. Hierbei wird ein Steuerbefehlsatz in einem einen Prozessor, ein Teilnehmermodul und eine Kommunikationseinheit aufweisenden mobilen Endgerät empfangen. Der empfangene Steuerbefehlsatz wird in einem Speicher des Teilnehmermoduls gespeichert. Nach der Speicherung werden Funktionen des mobilen Endgeräts durch das Teilnehmermodul in Abhängigkeit von Befehlen des Steuerbefehlssatz über eine Schnittstelle zwischen dem Teilnehmermodul und dem mobilen Endgerät aktiviert.

Es ist erkannt worden, dass das Teilnehmermodul selbst, welches beispielsweise eine Subscriber Identity Module (SIM) Karte sein kann, die Steuerbefehle aktivieren und ausführen kann. Somit ist es möglich, ohne den Prozessor des mobilen Endgeräts selbst zu verwenden, einen Satz von Steuerbefehlen auszuführen. Die Steuerbefehle können beispielsweise AT-Befehle sein. AT-Befehle können Standard Steuerbefehle für ein Telefon sein.

Mit Hilfe dieser Steuerbefehle ist es möglich, verschiedenste Funktionen, beispielsweise Tastendrücke, innerhalb des mobilen Endgeräts zu aktivieren. Somit wird anmeldungsgemäß durch das Teilnehmermodul über eine Schnittstelle eine Funktion auf den mobilen Endgerät ausgeführt. Das Teilnehmermodul steuert somit verschiedenste Funktionen. Der Prozessor des mobilen Endgeräts selbst ist lediglich für die Ausführung der Funktionen zuständig.

Gemäß eines vorteilhaften Ausführungsbeispiels wird vorgeschlagen, dass der Steuerbefehlssatz zumindest Befehle zum Aktivieren von Tastendruckbefehlen des mobilen Endgeräts aufweist. So ist es beispielsweise möglich, mit Hilfe der Steuerbefehle das mobile Endgerät anzuweisen, verschiedene Tastendrücke zu aktivieren. Beispielsweise können verschiedene Abfolgen von Tastendrücken mit Hilfe der Steuerbefehle aktiviert werden. Der Steuerbefehlssatz kann ein Stapel von verschiedenen Befehlen sein. Dieser Stapel kann anmeldungsgemäß abgearbeitet werden, wodurch eine Abfolge von verschiedenen Tastendruckbefehlen als auch anderer Befehle auf dem mobilen Endgerät ausgeführt werden können.

Es ist ebenfalls möglich, dass der Steuerbefehlssatz eine Routine zum Ausführen eines auf dem mobilen Endgerät ausführbaren Programms aufweist. Das auf dem mobilen Endgerät ausführbare Programm kann beispielsweise ein Mehrwertdienst sein. Ein solcher Mehrwertdienst kann beispielsweise ein Multimedia Messaging Service (MMS), ein Push-to-Talk Service, ein Wireless Access Protocol (WAP) Service, ein Streaming Dienst, ein Instant Messaging (IM) Dienst, ein Web Browsing Dienst, oder ein anderer Dienst sein.

Die Routine kann beispielsweise ein Stapel von Befehlen enthalten. Auch ist es möglich, dass die Routine eine Testroutine ist. Die Testroutine kann Befehle zum Testen von Funktionen enthalten. Durch die in den Steuerbefehlen hinterlegte Routine ist es möglich, die verschiedenen Programme zu überprüfen. Hierbei ist es beispielsweise möglich, durch die Testroutine verschiedene Programmabläufe und Menüstrukturen der Programme zu durchlaufen und deren Funktionalität zu überprüfen. Die Testroutine ermöglicht es beispielsweise, ein Programm mit all seinen verschiedensten Funktionen und Möglichkeiten zu überprüfen. Dadurch kann getestet werden, ob das Programm auf dem mobilen Endgerät funktioniert.

Anmeldungsgemäß wird vorgeschlagen, dass das Aktivieren von Funktionen des mobilen Endgeräts durch das Teilnehmermodul Aktionen eines tatsächlichen Nutzers emuliert. Entgegen der Möglichkeit, einen Test manuell durchzuführen, wird vorgeschlagen, dass durch die Übermittlung der Steuerbefehle an das mobile Endgerät die manuellen Tasteneingaben durch von dem Teilnehmermodul gesteuerte Tasteneingaben ersetzt werden. Der Testablauf kann identisch sein mit einem manuellen Test. Der Unterschied besteht darin, dass das Teilnehmermodul das mobile Endgerät über die Schnittstelle aktiviert, um die verschiedenen Funktionen durchzuführen.

Gemäß eines Ausführungsbeispiels wird vorgeschlagen, dass der Steuerbefehlssatz von einem Hintergrundsystem übermittelt wird. Ein Hintergrundsystem kann beispielsweise ein GSM-Netz, ein CDMA-Netz, ein GPRS-Netz, ein UMTS-Netz, ein sonstiges zellulares Netz oder ein drahtlos oder drahtgebundenes Netz sein. In dem Hintergrundsystem kann der Steuerbefehlssatz abgelegt sein und auf Anforderung von dem mobilen Endgerät über das Hintergrundsystem auf das mobile Endgerät übertragen werden.

Um Testergebnisse überprüfen zu können, wird vorgeschlagen, dass Funktionszustände des mobilen Endgerätes nach der Aktivierung der Funktionen zumindest in dem Speicher des Teilnehmermoduls und/oder einem Speicher des mobilen Endgeräts gespeichert werden. Die Funktionszustände nach dem Aktivieren einzelner Steuerbefehle können abgefragt und abgespeichert werden. Hierdurch ist es möglich, nach dem Abarbeiten mehrerer Steuerbefehlssätze die Veränderung der Funktionszustände im Nachhinein zu überprüfen und zu bewerten.

Um eine genaue Aussage über die Funktionalität von Softwareanwendungen treffen zu können, ist es möglich, dass Zustände eines Displays des mobilen Endgerätes oder Zustände des Prozessors des mobilen Endgerätes oder Positionen innerhalb einer Menüstruktur des mobilen Endgerätes als Funktionszustände abgefragt und abgespeichert werden. Dadurch ist es möglich zu überprüfen, ob die Steuerbefehle die gewünschten Reaktionen innerhalb des mobilen Endgerätes erzeugt haben.

Beispielsweise ist es möglich, dass zusammen mit dem Steuerbefehlssatz verschiedene Soll-Zustände der Funktionszustände des mobilen Endgeräts definiert werden. Anhand der Soll-Zustände ist es möglich, zu überprüfen, ob die tatsächlich erreichten Funktionszustände der mobilen Endgeräte korrekt sind. Ein Soll-Ist-Vergleich ermöglicht es, zu überprüfen, ob der Ablauf der Steuerbefehlssätze zu dem gewünschten Ergebnis geführt hat.

Um eine Überprüfung der durchgeführten Tests zentral durchführen zu können, wird vorgeschlagen, dass die Funktionszustände mit Hilfe der Kommunikationseinheit des mobilen Endgeräts an das Hintergrundsystem übermittelt werden. Hierbei ist es beispielsweise möglich, dass die Funktionszustände mittels Kurzmitteilungen (SMS) an das Hintergrundsystem übertragen werden. Auch ist es möglich, dass zur Übertragung der Funktionszustände eine Datenverbindung zwischen dem mobilen Endgerät und dem Hintergrundsystem aufgebaut wird und über diese Datenverbindung die Funktionszustände übertragen werden. Es ist beispielsweise möglich, dass alle erreichten Funktionszustände während eines Ablaufs eines Steuerbefehlssatzes in einer Datei gespeichert werden und diese Datei von dem mobilen Endgerät an das Hintergrundsystem nach Abarbeitung der Steuerbefehle übermittelt wird. Diese Übertragung kann beispielsweise auch durch die Steuerbefehle aktiviert werden.

Eine gute Qualitätskontrolle ist dadurch möglich, dass das Hintergrundsystem die übermittelten Funktionszustände speichert. Hierdurch ist es möglich, dass im Nachhinein die ermittelten Testergebnisse überprüft werden können.

Hierzu ist es beispielsweise möglich, dass die ermittelten Funktionszustände in einer Ergebnisdatenbank gespeichert werden. Die Ergebnisdatenbank gibt somit Aufschluss über eine Vielzahl verschiedener Tests und kann im Nachhinein verwendet werden, um die durchgeführten Tests zu verifizieren.

Zur Überprüfung, ob die getesteten Mehrwertdienste und Programme, wie gewünscht auf den verschiedenen Endgeräten funktionieren, wird vorgeschlagen, dass die übermittelten Funktionszustände von dem Hintergrundsystem ausgewertet werden. Hierbei kann beispielsweise durch das Hintergrundsystem ein vergleich der Soll-Zustände mit den übermittelten Funktionszuständen durchgeführt werden und bei einer Abweichung kann ein Warnsignal ausgegeben werden.

Es ist beispielsweise möglich, auf ein und demselben mobilen Endgerät eine Vielzahl von verschiedenen Mehrwertdiensten und Programmen nacheinander zu testen. Hierzu ist es beispielsweise möglich, dass nach Abarbeitung eines ersten Steuerbefehlssatzes dieser die abgespeicherten Funktionszustände an das Hintergrundsystem übermittelt. Danach kann von dem Teilnehmermodul ein neuer Steuerbefehlssatz von dem Hintergrundsystem angefordert werden. Auch kann nach der Abarbeitung der Steuerbefehle durch das Teilnehmermodul von dem Hintergrundsystem ein neues Programm für die Übermittlung an das mobile Endgerät angefordert werden. Es ist möglich, einen für ein Programm passenden Steuerbefehlssatz zunächst auf ein mobiles Endgerät zu übertragen, danach das entsprechende Programm auf das mobile Endgerät zu übertragen, um anschließend den in dem Steuerbefehlssatz hinterlegten Test an dem Programm auf dem jeweiligen mobilen Endgerät durchzuführen. Auch kann die Anforderung der neuen Steuerbefehlssätze als auch der neuen Programme abhängig von der Auswertung der Funktionszustände sein. So kann eine Anforderung neuer Steuerbefehlssätze oder neuer Programme beispielsweise nur dann möglich sein, wenn die Auswertung der Funktionszustände ein positives Auswertungsergebnis ergeben hat. Auch ist es möglich, dass bei der Auswertung der Funktionszustände festgestellt wird, dass eine Abweichung des Ist-Zustandes von dem Soll-Zustand vorliegt. In diesem Falle kann es beispielsweise hilfreich sein, veränderte Parameter für die Steuerbefehle von dem Hintergrundsystem anzufordern, um den Funktionszustand des mobilen Endgeräts in den Soll-Zustand zu bringen.

Eine Anforderung neuer Steuerbefehlssätze kann beispielsweise dadurch möglich sein, dass das Teilnehmermodul mittels der Kommunikationseinheit des mobilen Endgerätes von dem Hintergrundsystem einen Steuerbefehlssatz anfordert.

Um verschiedenste Programme oder Mehrwertdienste auf verschiedenen mobilen Endgeräten testen zu können, ist es notwendig, die Steuerbefehlssätze derart auszulegen, dass diese mit den mobilen Endgeräten, auf denen die Programme getestet werden können, kompatibel sind. Naturgemäß haben verschiedene mobile Endgeräte verschiedene Menüstrukturen und fordern somit eine verschiedenartige Abfolge von Tastendrücken, um die gewünschten Zustände zu erreichen. Daher kann es notwendig sein, für jeden Typ eines mobilen Endgerätes einen eigenen Steuerbefehlssatz zu hinterlegen, um ein Programm testen zu können. Aus diesem Grunde wird vorgeschlagen, dass zusammen mit der Anforderung des Steuerbefehlssatzes zumindest eine das mobile Endgerät und/oder das Teilnehmermodul kennzeichnende Identifikation an das Hintergrundsystem übermittelt wird. Mit Hilfe der Identifikation des mobilen Endgerätes kann das Hintergrundsystem erkennen, welche Art und/oder welcher Typ eines mobilen Endgerätes getestet wird. Abhängig von dieser Identifikation kann das Hintergrundsystem den passenden Steuerbefehlssatz auswählen und an das mobile Endgerät übermitteln. Mit Hilfe des passenden Steuerbefehlssatzes kann dann das Teilnehmermodul das mobile Endgerät testen.

Auch ist es möglich, dass ein zu testendes Programm bereits auf dem mobilen Endgerät gespeichert ist. Ist dies der Fall, muss zum Testen des Programms in dem Hintergrundsystem bekannt sein, welches Programm getestet werden soll. In diesem Falle ist es möglich, dass zusammen mit der Anforderung des Steuerbefehlssatzes zumindest eine das auf dem mobilen Endgerät ausführbare Programm kennzeichnende Identifikation an das Hintergrundsystem übermittelt wird. Mit Hilfe der Identifikation des Programms kann das Hintergrundsystem den Steuerbefehlssatz auswählen, der zur Steuerung des zu testenden Programms notwendig ist.

Gemäß eines Ausführungsbeispiels wird vorgeschlagen, dass das Hintergrundsystem die Anforderung des Steuerbefehlsatz empfängt und als Antwort auf die Anforderung den Steuerbefehlsatz an das mobile Endgerät übermittelt. Hierzu kann das Hintergrundsystem verschiedene Übermittlungsverfahren wählen. Beispielsweise ist es möglich, den Steuerbefehlssatz als SMS, MMS oder über eine Datenverbindung an das mobile Endgerät zu übertragen.

Wie bereits zuvor beschrieben, kann es notwendig sein, dass zum Testen verschiedener Programme auf verschiedenen mobilen Endgeräten der Typ des mobilen Endgerätes und das zu testende Programm bekannt ist, um den entsprechenden Steuerbefehlssatz auszuwählen. Daher wird vorgeschlagen, dass das Hintergrundsystem die das mobile Endgerät und/oder das Teilnehmermodul kennzeichnende Identifikation auswertet und in Abhängigkeit vom Auswertungsergebnis einen Steuerbefehlssatz aus einer Auswahl von Steuerbefehlssätzen zur Übermittlung an das mobile Endgerät auswählt.

Um zu ermöglichen, dass unabhängig vom Prozessor des mobilen Endgeräts ein neues Programm angefordert werden kann, wird vorgeschlagen, dass das auf dem mobilen Endgerät ausführbare Programm von dem Teilnehmermodul mittels der Kommunikationseinheit des mobilen Endgerätes von dem Hintergrundsystem angefordert wird.

Um einen Steuerbefehl auszuwählen, der auf das zu testende Programm passt, kann das Hintergrundsystem die das auf dem mobilen Endgerät ausführbare Programm kennzeichnende Identifikation auswerten und in Abhängigkeit vom Auswertungsergebnis einen Steuerbefehlssatz aus einer Auswahl von Steuerbefehlssätzen zur Übermittlung an das mobile Endgerät auswählen.

Die Kommunikation zwischen dem mobilen Endgerät und dem Hintergrundsystem kann beispielsweise über eine Luftschnittstelle oder eine Kabelschnittstelle erfolgen. Die Luftschnittstelle kann beispielsweise durch ein zellulares Netz gebildet sein.

Die Kommunikation zwischen dem mobilen Endgerät und dem Hintergrundsystem kann beispielsweise paketvermittelt oder leitungsvermittelt sein.

Um ein Starten des Tests zu automatisieren, kann die Anforderung des Steuerbefehlssatzes und/oder des Programms durch ein durch das mobile Endgerät ausgelöstes Auslösesignal gestartet werden. Ein solches Auslösesignal kann beispielsweise das Anschalten des mobilen Endgeräts sein. Auch kann ein Auslösesignal das Einstecken des Teilnehmermoduls in das mobile Endgerät sein. In diesem Falle kann durch ein im mobilen Endgerät ausgelöstes Auslösesignal der Steuerbefehlssatz im Teilnehmermodul gestartet werden.

Es ist bevorzugt, dass das Teilnehmermodul ein Subscriber Identity Module (SIM) ist. Auch kann das Teilnehmermodul ein Universal SIM (USIM) sein. Das Teilnehmermodul kann zur Ausführung von Steuerbefehlssätzen geeignet sein.

Hierfür ist es beispielsweise möglich, dass das Teilnehmermodul eine Scriptingsprache ausführen kann. Auch ist es möglich, dass das Teilnehmermodul Java-fähig ist und somit Java Applikationen und/oder Applets ausführen kann.

Bevorzugt ist, dass die Schnittstelle zwischen dem Teilnehmermodul und dem mobilen Endgerät eine standardisierte Schnittstelle ist. Dieses standardisierte Schnittstelle kann beispielsweise das Subscriber Identity Module Application Toolkit (SIM Toolkit) oder das Universal Subscriber Identity Module Application Toolkit (USIM Toolkit) sein. Über diese Schnittstellen lassen sich beispielsweise AT-Befehle oder andere Steuerbefehle von dem Teilnehmermodul an das mobile Endgerät übertragen und das mobile Endgerät führt diese Aktionen durch.

Ein weiterer Gegenstand ist ein Verfahren zur Steuerung eines mobilen Endgerätes nach Anspruch 26.

Um einen geeigneten Steuerbefehlssatz auszuwählen, wird vorgeschlagen, dass zusammen mit dem Anforderungssignal eine das mobile Endgerät und/oder das Teilnehmermodul kennzeichnende Identifikation empfangen wird und dass in Abhängigkeit von der Identifikation ein Steuerbefehlssatz aus einer Auswahl von Steuerbefehlssätzen ausgewählt wird.

Ein weiterer Gegenstand ist ein mobiles Endgerät nach Anspruch 28.

Ein weiterer Gegenstand ist ein System mit einem zuvor beschriebenen mobilen Endgerät und einem Hintergrundsystem mit einem Speicher zum Speichern zumindest von Steuerbefehlssätzen und einem Speicher zum Speichern zumindest von Funktionszuständen des mobilen Endgerätes.

Ein weiterer Gegenstand ist ein Computerprogramm nach Anspruch 30.

Nachfolgend wird die Anmeldung anhand einer Ausführungsbeispiele zeigenden Zeichnung näher erläutert. In der Zeichnung zeigen:
- Fig. 1: ein System mit einem mobilen Endgerät und einem Hintergrundsystem;
- Fig. 2: ein Ablaufdiagramm eines Verfahrens gemäß der Anmeldung.

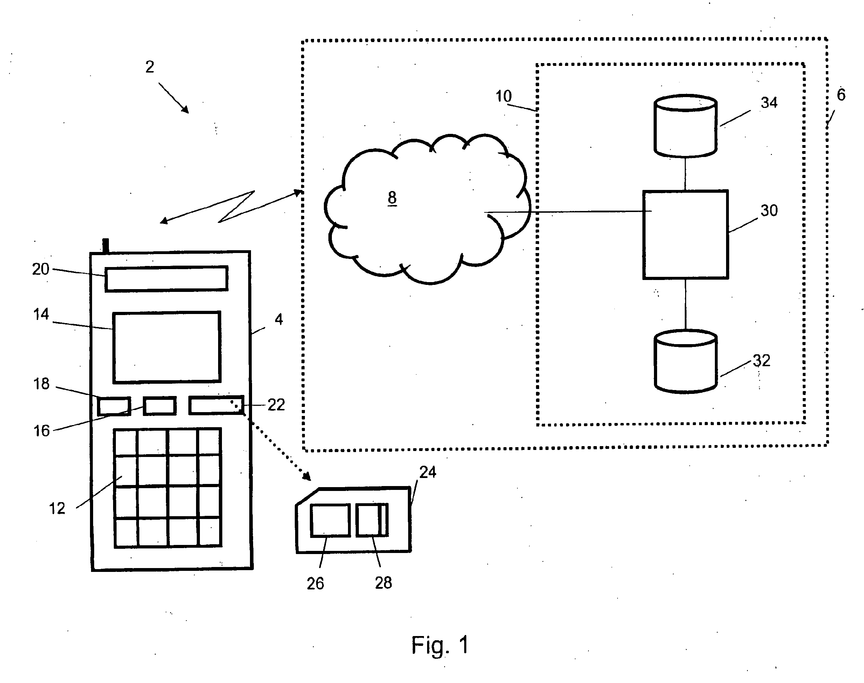

Figur 1 zeigt ein System 2 mit einem mobilen Endgerät 4, einem Hintergrundsystem 6, welches aus einem zellularen Netz 8 und einem Funktionsbereitstellungsserver 10, beispielsweise einen Over the Air (OTA) Server gebildet sein kann. Auch ist es möglich, wenn auch nicht dargestellt, dass der Funktionsbereitstellungsserver über ein Kabel zur Kommunikation mit dem mobilen Endgerät verbunden ist.

Das mobile Endgerät 4 kann beispielsweise ein Mobiltelefon, ein Smartphone, ein PDA, oder ein sonstiges Endgerät zur Kommunikation mit dem Hintergrundsystem 6 sein. Das mobile Endgerät 4 weist eine Tastatur 12, ein Display 14 und einen Prozessor 16 auf.

Darüber hinaus weist das mobile Endgerät 4 einen Speicher 18 sowie eine Kommunikationseinheit 20 auf. Schließlich weist das mobile Endgerät 4 eine Schnittstelle 22 zur Kommunikation mit einem Teilnehmermodul 24 auf.

Das Teilnehmermodul 24 weist einen Prozessor 26 und einen Speicher 28 auf. Der Speicher 28 ist so eingerichtet, dass dieser einen Steuerbefehlssatz speichern kann.

Das Hintergrundsystem 6 weist das zellulare Netz 8 und den Funktionsbereitstellungsserver 10 auf. Der Funktionsbereitstellungsserver 10 ist über einen Computer 30 mit einer ersten Datenbank 32 und einer Ereignisdatenbank 34 verbunden. In der ersten Datenbank 32 sind verschiedene Steuerbefehlssätze abgelegt. Den Steuerbefehlssätzen können verschiedene Typen von mobilen Endgeräten zugeordnet sein. Außerdem können den Steuerbefehlssätzen verschiedene Typen von zu testenden Programmen zugeordnet sein. Somit liegt in der ersten Datenbank 32 eine Bibliothek von Steuerbefehlssätzen, welche durch den Typ eines Programms und den Typ eines mobilen Endgeräts qualifiziert werden können.

In der Ereignisdatenbank 34 können von dem Computer 30 über das zellulare Netz 8 empfangene Funktionszustände oder Sätze von Funktionszuständen abgespeichert werden. Hierbei ist es möglich, die Funktionszustände oder Sätze von Funktionszuständen zugeordnet zu bestimmten Typen von mobilen Endgeräten 4 bzw. bestimmten Programmen zu speichern.

Das mobile Endgerät 4 wird über die Tastatur 12 gesteuert. In dem Speicher 18 ist ein Betriebssystem, beispielsweise J2ME, Symbian C++, Windows Mobile, Brew, Flash Lite, Linux oder ein anderes Betriebssystem abgelegt. Durch den Prozessor 16 kann das Betriebssystem ausgeführt werden und das mobile Endgerät 4 kann über die Kommunikationseinheit 20 mit dem zellularen Netz 8 kommunizieren. Die Funktionen des Betriebsystems werden über den Prozessor 16 aufgerufen. Über das Display 14 können verschiedene Menüstrukturen angezeigt werden. Ein Benutzer kann mit Hilfe der Tastatur 12 innerhalb der auf dem Display 14 angezeigten Menüstruktur navigieren und verschiedene Funktionen und Funktionalitäten auslösen.

Um dem Benutzer neben der reinen Telefonie einen Mehrwert mit dem mobilen Endgerät zur Verfügung zu stellen, kann in dem Speicher 18 neben dem Betriebssystem eine Anzahl von verschiedenen Programmen, wie beispielsweise Mehrwertdienste, gespeichert werden. Dieses können ebenfalls durch den Prozessor 18 aufgerufen werden. Zur Nutzung der Mehrwertdienste kann der Benutzer die Tastatur 12 nutzen und entsprechend durch die Menüstruktur, die über das Display 14 angezeigt wird, navigieren und die Funktionen nutzen.

Das Teilnehmermodul 24 kann beispielsweise eine Subscriber Identity Module (SIM) Karte oder eine Universal Subscriber Identity Module (USIM) Karte sein. Das Teilnehmermodul 24 kann einen Prozessor 26 aufweisen. Ferner kann das Teilnehmermodul 24 einen Speicher 28 aufweisen, der in verschiedene Speicherbereiche unterteilt ist. In dem Speicher 28 kann beispielsweise ein Steuerbefehlssatz in einem bestimmten Speicherbereich abgelegt sein und über den Prozessor 26 aufgerufen werden. Der Prozessor 26 kann beispielsweise dazu eingerichtet sein, Java-Programme oder Applikationen auszuführen. Beispielsweise ist das Teilnehmermodul eine Java-fähige Karte.

Die Kommunikation zwischen dem Teilnehmermodul 24 und dem mobilen Endgerät 4 erfolgt über die Schnittstelle 22. Die Schnittstelle 22 kann beispielsweise eine SIM Application Toolkit Schnittstelle sein. Auch ist es möglich, dass die Schnittstelle 22 eine Universal SIM Application Toolkit Schnittstelle ist. Auch andere Schnittstellen sind möglich. Über die Schnittstelle 22 können die in dem Speicher 28 gespeicherten Steuerbefehle, beispielsweise AT-Kommandos, an das mobile Endgerät 4 übermitteln und somit beispielsweise Tastendrücke auf der Tastatur 12 emuliert werden. Der Prozessor 16 empfängt über die Schnittstelle 22 die Steuerbefehle und führt diese aus. Für den Prozessor 16 ist das Ausführen dieser Befehle unabhängig davon, ob diese über einen tatsächlichen Tastendruck auf der Tastatur 12 oder über einen Steuerbefehl über die Schnittstelle 22 initiiert wurde.

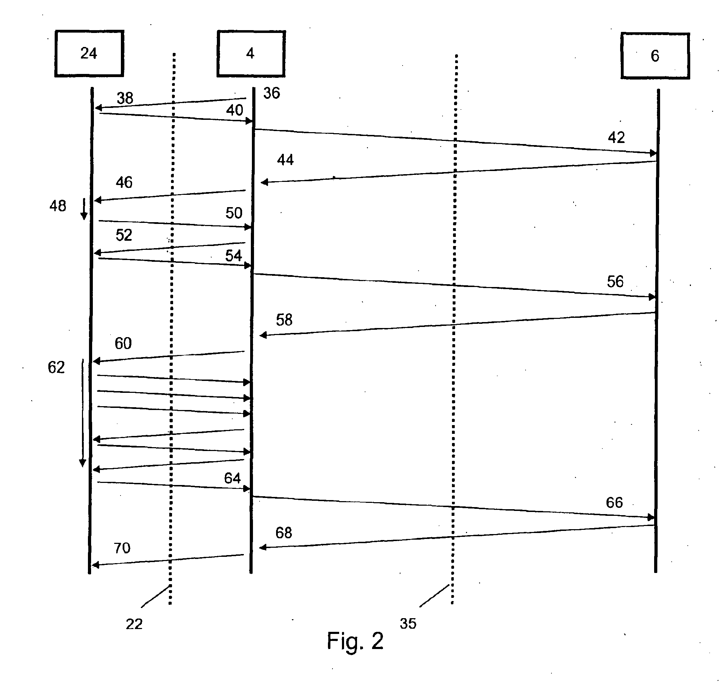

Nachfolgend wird das anmeldungsgemäße Verfahren in Figur 2 näher erläutert. Fig. 2 zeigt einen Kommunikationsablauf zwischen einem mobilen Endgerät 4, einem Teilnehmermodul 24 und einem Hintergrundsystem 6. Das mobile Endgerät 4 kommuniziert mit dem Teilnehmermodul 24 über die Schnittstelle 22. Das mobile Endgerät 4 kommuniziert mit dem Hintergrundsystem 6 über eine Schnittstelle 35, welche von der Kommunikationseinheit 20 und dem Hintergrundsystem 8 unterstützt wird.

Beim Einschalten 36 des mobilen Endgeräts 4 wird ein Auslösesignal 38 über die Schnittstelle 22 an das Teilnehmermodul 24 übermittelt. Beim Empfangen des Auslösesignals 38 überprüft das Teilnehmermodul 24 mit seinem Prozessor 26 in seinem Speicher 28 das vorliegen von einer Testroutine, beispielsweise in Form von Steuerbefehlen.

Auch ist es möglich, dass sich das mobile Endgerät 4 nach dem Einschalten 36 am Hintergrundsystem anmeldet. Es ist möglich, dass das Hintergrundsystem das mobile Endgerät ansteuert, beispielsweise über eine SMS, beispielsweise mit einem bestimmten Code, um das Auslösesignal zu aktivieren.

Liegt eine solche Testroutine im Speicher 28 nicht vor, übermittelt das Teilnehmermodul 24 über die Schnittstelle 22 an das mobile Endgerät 4 ein Anforderungssignal zur Anforderung einer Testroutine. Nach Erhalt des Anforderungssignals 40 übermittelt das Endgerät 4 über die Schnittstelle 36 ein Anforderungssignal 42 an das Hintergrundsystem 6. Das Anforderungssignal 42 enthält neben der Bezeichnung der angeforderten Testroutine auch eine das mobile Endgerät kennzeichnende Identifikation und kann zusätzlich eine das Teilnehmermodul 24 kennzeichnende Identifikation enthalten. In der das mobile Endgerät 4 kennzeichnenden Identifikation kann beispielsweise der Typ des mobilen Endgeräts enthalten sein.

Nach Erhalt des Anforderungssignals 42 überprüft das Hintergrundsystem 6 mit Hilfe des Computers 30 in seiner ersten Datenbank 32, ob für den identifizierten Typ des mobilen Endgeräts 4 eine angeforderte Testroutine vorliegt. Ist dies der Fall, übermittelt 44 das Hintergrundsystem 6 über die Schnittstelle 36 die entsprechende Testroutine an das mobile Endgerät 4. Das mobile Endgerät 4 übermittelt 46 über die Schnittstelle 22 die Testroutine an das Teilnehmermodul 24.

Die Testroutine wird im Speicher 28 des Teilnehmermoduls 24 gespeichert. Der Prozessor 26 des Teilnehmermoduls 24 aktiviert 48 die Testroutine.

Die Testroutine übermittelt 50 an das mobile Endgerät 24 eine Anfrage, ob ein der Testroutine zugeordnetes Programm im Speicher 18 des mobilen Endgerätes 24 gespeichert ist. Ist die Rückmeldung 52 negativ, veranlasst das Teilnehmermodul eine Anforderung 54 für das Programm. Ansonsten beginnt das Teilnehmermodul die Testroutine, wie weiter unten beschrieben werden wird.

Nach Erhalt der Anforderung 54 übermittelt das mobile Endgerät 4 eine Anforderung 56 für das Programm an das Hintergrundsystem. Zusammen mit der Anforderung 56 übermittelt das mobile Endgerät 4 eine kennzeichnende Identifikation.

Nach Erhalt der Anforderung 56 ermittelt das Hintergrundsystem das angeforderte Programm passend zu dem identifizierten mobilen Endgerät4. Das ermittelte Programm wird aus der ersten Datenbank 32 geladen und an das mobile Endgerät 4 übermittelt 58. Das mobile Endgerät 4 teilt dem Teilnehmermodul 24 den Empfang des Programms mit 60.

Daraufhin startet der Prozessor 26 die Testroutine 62. Über die Schnittstelle 22 werden Funktionen des mobilen Endgerätes 4 ausgelöst und Funktionszustände des mobilen Endgerätes 4 werden an das Teilnehmermodul übertragen. Die Funktionszustände können in dem Speicher 24 oder dem Speicher 18 gespeichert werden. Über die Schnittstelle 22 können beispielsweise AT Befehle an das mobile Endgerät 4 übertragen werden. Durch die AT Befehle kann das mobile Endgerät veranlasst werden, zu reagieren, als würden tatsächlich Tasten der Tastatur gedrückt werden. Dadurch ist es möglich, eine Menüstruktur und einen Ablauf des Programms zu testen, ohne dass tatsächlich manuelle Tastendrücke notwendig sind.

Nach Ablauf der Testroutine 62 veranlasst 64 das Teilnehmermodul 24 das mobile Endgerät 4, die gespeicherten Funktionszustände an das Hintergrundsystem 6 zu übermitteln 66. Hierbei werden neben den gespeicherten Zuständen auch eine Identifikation des mobilen Endgerätes 4, der Testroutine, des Programms und/oder des Teilnehmermoduls 24 übermittelt.

Das Hintergrundsystem speichert in der Ergebnisdatenbank 34 die übermittelten Funktionszustände zusammen mit der Identifikation des mobilen Endgerätes 4, der Testroutine, des Programms und/oder des Teilnehmermoduls 24. Das Hintergrundsystem kann eine Auswertung der Testroutine durch einen vergleich der gespeicherten Funktionszustände mit Soll- Zuständen durchführen und somit Fehler im Programm feststellen.

Nach Beendigung der Auswertung kann das Hintergrundsystem ein Auslösesignal an das mobile Endgerät 4 übermitteln 68. Beim Empfang des Auslösesignals kann das mobile Endgerät dies an das Teilnehmermodul 24 melden 70. Hierauf kann das Teilnehmermodul mit einer neuen Anforderung 40 oder einer Anforderung 54 reagieren und einen neuen Test eines bestehenden Programms oder einen neuen Test eines neuen Programms initiieren.

Durch das beschriebene Verfahren ist es möglich, automatisch, ohne Eingriffe in das Betriebssystem des mobilen Endgerätes 4 verschiedene Programme und Mehrwertdienst zu testen und netzseitig auszuwerten.

## Patentansprüche

1. Verfahren zur Steuerung eines mobilen Endgerätes durch:
- Empfangen eines Steuerbefehlssatzes in einem einen Prozessor (16), ein Teilnehmermodul (24) und eine Kommunikationseinheit (20) aufweisenden mobilen Endgerät (4),
- Speichern eines Steuerbefehlssatzes in einen Speicher (28) eines Teilnehmermoduls (24) eines mobilen Endgerätes (4), und
- Aktivieren von Funktionen des mobilen Endgeräts (4) durch das Teilnehmermodul (24) in Abhängigkeit von über eine Schnittstelle (22) zwischen dem Teilnehmermodul (24) und dem mobilen Endgerät (4) kommunizierten Befehlen des Steuerbefehlssatzes
**dadurch gekennzeichnet,**
- **dass** der Steuerbefehlssatz einen Stapel von auf dem mobilen Endgerät (4) abarbeitbaren Befehlen aufweist, wobei
- der Steuerbefehlssatz zumindest Befehle zum Aktivieren von Tastendruckbefehlen des mobilen Endgerätes (4) aufweist.

2. Verfahren nach einem der vorangehenden Ansprüche, **dadurch gekennzeichnet, dass** das Aktivieren von Funktionen des mobilen Endgeräts (4) durch das Teilnehmermodul (24) Aktionen eines tatsächlichen Nutzers emuliert.

3. Verfahren nach einem der vorangehenden Ansprüche, **dadurch gekennzeichnet, dass** der Steuerbefehlssatz von einem Hintergrundsystem (6) übermittelt wird.

4. Verfahren nach einem der vorangehenden Ansprüche, **dadurch gekennzeichnet, dass** Funktionszustände des mobilen Endgerätes nach der Aktivierung der Funktionen zumindest in dem Speicher (28) des Teilnehmermoduls (24) und/oder einem Speicher (18) des mobilen Endgerätes (4) gespeichert werden.

5. Verfahren nach einem der vorangehenden Ansprüche, **dadurch gekennzeichnet, dass** die Funktionszustände Zustände des Prozessors (16) des mobilen Endgerätes (4) und/oder Zustände eines Displays des mobilen Endgerätes (4) sind.

6. Verfahren nach einem der vorangehenden Ansprüche, **dadurch gekennzeichnet, dass** die Funktionszustände von der Kommunikationseinheit (20) des mobilen Endgeräts (4) an das Hintergrundsystem (6) übermittelt werden.

7. Verfahren nach einem der vorangehenden Ansprüche, **dadurch gekennzeichnet, dass** das Hintergrundsystem (6) die übermittelten Funktionszustände speichert.

8. Verfahren nach einem der vorangehenden Ansprüche, **dadurch gekennzeichnet, dass** das Hintergrundsystem (6) die übermittelten Funktionszustände in einer Ergebnisdatenbank (34) speichert.

9. Verfahren nach einem der vorangehenden Ansprüche, **dadurch gekennzeichnet, dass** die übermittelten Funktionszustände von dem Hintergrundsystem (6) ausgewertet werden.

10. Verfahren nach einem der vorangehenden Ansprüche, **dadurch gekennzeichnet, dass** von dem Hintergrundsystem (6) abhängig von der Auswertung der Funktionszustände geänderte und/oder neue Steuerbefehlssätze und/oder neue Programme an das mobile Endgerät (4) übermittelt werden.

11. Verfahren nach einem der vorangehenden Ansprüche, **dadurch gekennzeichnet, dass** der Steuerbefehlssatz von dem Teilnehmermodul (24) mittels der Kommunikationseinheit (20) des mobilen Endgerätes (4) von dem Hintergrundsystem (6) angefordert wird.

12. Verfahren nach einem der vorangehenden Ansprüche, **dadurch gekennzeichnet, dass** zusammen mit der Anforderung des Steuerbefehlssatzes zumindest eine das mobile Endgerät (4) und/oder das Teilnehmermodul (24) kennzeichnende Identifikation an das Hintergrundsystem (6) übermittelt wird.

13. Verfahren nach einem der vorangehenden Ansprüche, **dadurch gekennzeichnet, dass** zusammen mit der Anforderung des Steuerbefehlssatzes zumindest eine das auf dem mobilen Endgerät (4) ausführbare Programm kennzeichnende Identifikation an das Hintergrundsystem (6) übermittelt wird.

14. Verfahren nach einem der vorangehenden Ansprüche, **dadurch gekennzeichnet, dass** das Hintergrundsystem (6) die Anforderung des Steuerbefehlssatzes empfängt und als Antwort auf die Anforderung den Steuerbefehlssatz an das mobile Endgerät (4) übermittelt.

15. Verfahren nach einem der vorangehenden Ansprüche, **dadurch gekennzeichnet, dass** Hintergrundsystem (6) die das mobile Endgerät (4) und/oder das Teilnehmermodul (24) kennzeichnende Identifikation auswertet und in Abhängigkeit vom Auswertungsergebnis einen Steuerbefehlssatz aus einer Auswahl von Steuerbefehlssätzen zur Übermittlung an das mobile Endgerät (4) auswählt.

16. Verfahren nach einem der vorangehenden Ansprüche, **dadurch gekennzeichnet, dass** das auf dem mobilen Endgerät (4) ausführbare Programm von dem Teilnehmermodul (24) mittels der Kommunikationseinheit (20) des mobilen Endgerätes (4) von dem Hintergrundsystem (6) angefordert wird.

17. Verfahren nach einem der vorangehenden Ansprüche, **dadurch gekennzeichnet, dass** das Hintergrundsystem (6) die Anforderung des ausführbaren Programms empfängt und als Antwort auf die Anforderung das ausführbaren Programm an das mobile Endgerät (4) übermittelt.

18. Verfahren nach einem der vorangehenden Ansprüche, **dadurch gekennzeichnet, dass** Hintergrundsystem (6) die das auf dem mobilen Endgerät (4) ausführbare Programm kennzeichnende Identifikation auswertet und in Abhängigkeit vom Auswertungsergebnis einen Steuerbefehlssatz aus einer Auswahl von Steuerbefehlssätzen zur Übermittlung an das mobile Endgerät (4) auswählt.

19. Verfahren nach einem der vorangehenden Ansprüche, **dadurch gekennzeichnet, dass** das mobile Endgerät (4) mittels der Kommunikationseinheit (20) mit dem Hintergrundsystem (6) über eine Luftschnittstelle oder eine Kabelschnittstelle kommuniziert.

20. Verfahren nach einem der vorangehenden Ansprüche, **dadurch gekennzeichnet, dass** das mobile Endgerät (4) mittels der Kommunikationseinheit (20) mit dem Hintergrundsystem (6) paketvermittelt oder leitungsvermittelt kommuniziert.

21. Verfahren nach einem der vorangehenden Ansprüche, **dadurch gekennzeichnet, dass** die Anforderung des Steuerbefehlssatzes und/oder des Programms durch ein durch das mobile Endgerät (4) ausgelöstes Auslösesignal gestartet wird.

22. Verfahren nach einem der vorangehenden Ansprüche, **dadurch gekennzeichnet, dass** durch ein im mobilen Endgerät (4) ausgelöstes Auslösesignal der Steuerbefehlssatz im Teilnehmermodul (24) gestartet wird.

23. Verfahren nach einem der vorangehenden Ansprüche, **dadurch gekennzeichnet, dass** das Teilnehmermodul (24) ein Subscriber Identity Module ist.

24. Verfahren nach einem der vorangehenden Ansprüche, **dadurch gekennzeichnet, dass** die Schnittstelle (22) zwischen Teilnehmermodul (24) und mobilem Endgerät (4) eine standardisierte Schnittstelle ist.

25. Verfahren nach einem der vorangehenden Ansprüche, **dadurch gekennzeichnet, dass** die standardisierte Schnittstelle (22) eine Subscriber Identity Module Application Toolkit oder eine Universal Subscriber Identity Module Application Toolkit Schnittstelle ist.

26. Verfahren zur Steuerung eines mobilen Endgerätes (4) durch:
- Empfangen eines Anforderungssignals für einen in einem Teilnehmermodul (24) eines mobilen Endgeräts (4) ausführbaren Steuerbefehlssatz in einem Hintergrundsystem (6),
- Auswählen eines gespeicherten Steuerbefehlssatzes zur Übermittlung an ein mobiles Endgerät (4) in dem Hintergrundsystem (6), und
- Übermitteln des ausgewählten Steuerbefehlssatzes von dem Hintergrundsystem (6) an das mobile Endgerät (4), **dadurch gekennzeichnet,**
- **dass** der Steuerbefehlssatz einen Stapel von auf dem mobilen Endgerät (4) abarbeitbaren Befehlen aufweist, wobei
- der Steuerbefehlssatz zumindest Befehle zum Aktivieren von Tastendruckbefehlen des mobilen Endgerätes (4) aufweist.

27. Verfahren nach Anspruch 26, **dadurch gekennzeichnet, dass** zusammen mit dem Anforderungssignal eine das mobile Endgerät (4) und/oder das Teilnehmermodul (24) kennzeichnende Identifikation empfangen wird und das in Abhängigkeit von der Identifikation ein Steuerbefehlssatz aus einer Auswahl von Steuerbefehlssätzen ausgewählt wird.

28. Mobiles Endgerät (4) mit:
- einem Teilnehmermodul (24),
- einem Prozessor (16),
- einer zum Empfangen eines Steuerbefehlssatzes eingerichteten Kommunikationseinheit (20),
- wobei das Teilnehmermodul (24) zum Speichern des Steuerbefehlssatzes eingerichtet ist, und
- wobei das Teilnehmermodul (24) zum Aktivieren von Funktionen des mobilen Endgeräts (4) in Abhängigkeit von über eine Schnittstelle (22) zwischen dem Teilnehmermodul (24) und dem mobilen Endgerät (4) kommunizierten Befehlen des Steuerbefehlssatzes eingerichtet ist
**dadurch gekennzeichnet,**
- **dass** der Steuerbefehlssatz einen Stapel von auf dem mobilen Endgerät (4) abarbeitbaren Befehlen aufweist, wobei
- der Steuerbefehlssatz zumindest Befehle zum Aktivieren von Tastendruckbefehlen des mobilen Endgerätes (4) aufweist.

29. System mit einem mobilen Endgerät (4) nach Anspruch 28 und einem Hintergrundsystem (6) mit einem Speicher (32) zum Speichern zumindest von Steuerbefehlssätzen und einem Speicher (34) zum Speichern zumindest von Funktionszuständen des mobilen Endgerätes (4).

30. Computerprogramm zur Steuerung eines mobilen Endgerätes (4) mit Instruktionen zum:
- Empfangen eines Steuerbefehlssatzes in einem einen Prozessor (16), ein Teilnehmermodul (24) und eine Kommunikationseinheit (20) aufweisenden mobilen Endgerät (4),
- Speichern des Steuerbefehlssatzes in einen Speicher (28) des Teilnehmermoduls (24), und
- Aktivieren von Funktionen des mobilen Endgeräts (4) durch das Teilnehmermodul (24) in Abhängigkeit von über eine Schnittstelle (22) zwischen dem Teilnehmermodul (24) und dem mobilen Endgerät (4) kommunizierten Befehlen des Steuerbefehlssatzes,
**dadurch gekennzeichnet,**
- **dass** der Steuerbefehlssatz einen Stapel von auf dem mobilen Endgerät (4) abarbeitbaren Befehlen aufweist, wobei
- der Steuerbefehlssatz zumindest Befehle zum Aktivieren von Tastendruckbefehlen des mobilen Endgerätes (4) aufweist.

## Claims

1. Method for controlling of a mobile terminal comprising:
- receiving a set of control commands in a mobile terminal (4) comprising a processor (16), a subscriber module (24) and a communications unit (20),
- storing a set of control commands in a memory (28) of a subscriber module (24) of a mobile terminal (4), and
- activating of functions of the mobile terminal (4) by the subscriber module (24) as a function of commands of the set of control commands via an interface (22) between the subscriber module (24) and the mobile terminal (4), **characterized in that**
- the set of control commands comprises a batch of commands to be carried out on the mobile terminal (4), wherein the set of control commands comprises at least commands for activating keystroke commands of the mobile terminal.

2. Method of any one of the preceding claims, **characterised in that** the activating of functions of the mobile terminal (4) by the subscriber module (24) emulates actions of an actual user.

3. Method of any one of the preceding claims, **characterised in that** the set of control commands is transmitted by a background system (6).

4. Method of any one of the preceding claims, **characterised in that** functional states of the mobile terminal are stored, after activation of the functions, at least in the memory (28) of the subscriber module (24) and/or a memory (18) of the mobile terminal (4).

5. Method of any one of the preceding claims, **characterised in that** the functional states are states of the processor (16) of the mobile terminal (4) and/or states of a display of the mobile terminal (4).

6. Method of any one of the preceding claims, **characterised in that** the functional states are transmitted to the background system (6) by the communications unit (20) of the mobile terminal (4).

7. Method of any one of the preceding claims, **characterised in that** the background system (6) stores the transmitted functional states.

8. Method of any one of the preceding claims, **characterised in that** the background system 86) stores the transmitted functional states in a results database (34).

9. Method of any one of the preceding claims, **characterised in that** the transmitted functional states are evaluated by the background system (6).

10. Method of any one of the preceding claims, **characterised in that** sets of control commands which are altered by the background system (6) as a function of the evaluation of the functional states and/or new sets of control commands and/or new programs are transmitted to the mobile terminal (4).

11. Method of any one of the preceding claims, **characterised in that** the set of control commands is requested by the subscriber module (24) from the background system (6) by means of the communications unit (20) of the mobile terminal (4).

12. Method of any one of the preceding claims, **characterised in that**, together with the request of the set of control commands, at least one identification characterising the mobile terminal (4) and/or the subscriber module (24) is transmitted to the background system (6).

13. Method of any one of the preceding claims, **characterised in that**, together with the request of the set of control commands, at least one identification characterising the program which can be executed on the mobile terminal (4) is transmitted to the background system (6).

14. Method of any one of the preceding claims, **characterised in that** the background system (6) receives the request of the set of control commands and transmits the set of control commands to the mobile terminal (4) as a response to the request.

15. Method of any one of the preceding claims, **characterised in that** the background system (6) evaluates the identification characterising the mobile terminal (4) and/or the subscriber module (24) and selects, as a function of the result of the evaluation, a set of control commands from a selection of sets of control commands for transmission to the mobile terminal (4).

16. Method of any one of the preceding claims, **characterised in that** the program which can be executed on the mobile terminal (4) is requested by the subscriber module (24) from the background system (6) by means of the communications unit (20) of the mobile terminal (4).

17. Method of any one of the preceding claims, **characterised in that** the background system (6) receives the request of the program which can be executed and transmits the program which can be executed to the mobile terminal (4) as a response to the request.

18. Method of any one of the preceding claims, **characterised in that** the background system (6) evaluates the identification characterising the program which can be executed on the mobile terminal (4) and selects, as a function of the result of the evaluation, a set of control commands from a selection of sets of control commands for transmission to the mobile terminal (4).

19. Method of any one of the preceding claims, **characterised in that** the mobile terminal (4) communicates with the background system (6) via an air interface or a cable interface by means of the communications unit (20).

20. Method of any one of the preceding claims, **characterised in that** the mobile terminal (4) communicates with the background system (6) in a packet-switched or circuit-switched manner by means of the communications unit (20).

21. Method of any one of the preceding claims, **characterised** that the requesting of the set of control commands and/or of the program is started by a trigger signal triggered by the mobile terminal (4).

22. Method of any one of the preceding claims, **characterised in that** the set of control commands in the subscriber module (24) is started by a trigger signal triggered in the mobile terminal (4).

23. Method of any one of the preceding claims, **characterised in that** the subscriber module (24) is a Subscriber Identity Module.

24. Method of any one of the preceding claims, **characterised in that** the interface (22) between the subscriber module (24) and mobile terminal (4) is a standardised interface.

25. Method of any one of the preceding claims, **characterised in that** the standardised interface (22) is a Subscriber Identity Module Application Toolkit or a Universal Subscriber Identity Module Application Toolkit interface.

26. Method for controlling a mobile terminal comprising:
- receiving a request signal for a set of control commands which can be carried out in a subscriber module (24) of a mobile terminal (4),
- selecting a stored set of control commands for transmission to a mobile terminal (4) in the background system (6), and
- transmitting the selected set of control commands from the background system (6) to the mobile terminal (4), **characterized in that**
- the set of control commands comprises a batch of commands to be carried out on the mobile terminal (4), wherein the set of control commands comprises at least commands for activating keystroke commands of the mobile terminal (4).

27. Method of claim 26, **characterised in that**, together with the request signal, an identification characterising the mobile terminal (4) and/or the subscriber module (24) is received and **in that** a set of control commands is selected from a selection of sets of control commands as a function of the identification.

28. Mobile terminal (4) comprising:
- a subscriber module (24),
- a processor (16),
- a communications unit (20) configured for receiving a set of control commands,
- wherein the subscriber module (24) is configured for storing the set of control commands, and
- wherein the subscriber module (24) is configured for activating functions of the mobile terminal (4) as a function of commands of the set of control commands communicated via an interface (22) between the subscriber module (24) and the mobile terminal (4),
**characterized in that**
- the set of control commands comprises a batch of commands to be carried out on the mobile terminal (4), wherein the set of control commands comprises at least commands for activating keystroke commands of the mobile terminal (4).

29. System having a mobile terminal (4) according to claim 28 and a background system (6) having a memory (32) for storing at least sets of control commands and a memory (34) for storing at least functional states of the mobile terminal (4).

30. Computer program controlling a mobile terminal (4) with instructions for:
- receiving a set of control commands in a mobile terminal (4) comprising a processor (16), a subscriber module (24) and a communications unit (20),
- storing the set of control commands in a memory (28) of the subscriber module (24), and
- activating of functions of the mobile terminal (4) by the subscriber module (24) as a function of commands of the set of control commands communicated via an interface (22) between the subscriber module (24) and the mobile terminal (4),
**characterized in that**
- the set of control commands comprises a batch of commands to be carried out on the mobile terminal (4), wherein the set of control commands comprises at least commands for activating keystroke commands of the mobile terminal (4).

## Revendications

1. Procédé pour la commande d'un terminal mobile par
- réception d'un jeu d'instructions de commande dans un terminal mobile (4), qui comprend un processeur (16), un module d'abonné (24) et une unité de communication (20),
- mémorisation d'un jeu d'instructions de commande dans une mémoire (28) d'un module d'abonné (24) d'un terminal mobile (4), et
- activation de fonctions du terminal mobile (4) par le module d'abonné (24) en fonction d'instructions du jeu d'instructions de commande, qui sont échangées par l'intermédiaire d'une interface (22) entre le module d'abonné (24) et le terminal mobile (4),
**caractérisé en ce que**
- le jeu d'instructions de commande présente une pile d'instructions, qui peuvent être traitées dans le terminal mobile (4),
- le jeu d'instructions de commande présente au moins des instructions pour activer des instructions par frappe de touches du terminal mobile (4).

2. Procédé selon la revendication précédente, **caractérisé en ce que** l'activation de fonctions du terminal mobile (4) par le module d'abonné (24) émule des actions d'un utilisateur réel.

3. Procédé selon l'une des revendications précédentes, **caractérisé en ce que** le jeu d'instructions de commande est transmis par un système de fond (6).

4. Procédé selon l'une des revendications précédentes, **caractérisé en ce que** les états de fonctionnement du terminal mobile sont mémorisés au moins dans la mémoire (28) du module d'abonné (24) et / ou dans une mémoire (18) du terminal mobile (4), après l'activation des fonctions.

5. Procédé selon l'une des revendications précédentes, **caractérisé en ce que** les états de fonctionnement sont des états du processeur (16) du terminal mobile (4) et / ou des états d'un écran de visualisation du terminal mobile (4).

6. Procédé selon l'une des revendications précédentes, **caractérisé en ce que** les états de fonctionnement sont transmis de l'unité de communication (20) du terminal mobile (4) au système de fond (6).

7. Dispositif selon l'une des revendications précédentes, **caractérisé en ce que** le système de fond (6) mémorise les états de fonctionnement transmis.

8. Procédé selon l'une des revendications précédentes, **caractérisé en ce que** le système de fond (6) mémorise dans une banque de données de résultats (34) les états de fonctionnement transmis.

9. Procédé selon l'une des revendications précédentes, **caractérisé en ce que** les états de fonctionnement transmis sont évalués par le système de fond (6).

10. Procédé selon l'une des revendications précédentes, **caractérisé en ce que** des jeux d'instructions de commande modifiés et / ou nouveaux sont communiqués au terminal mobile (4) par le système de fond (6) en fonction de l'évaluation des états de fonctionnement.

11. Procédé selon revendication précédentes, **caractérisé en ce que** le jeu d'instructions de commande du module d'abonné (24) est demandé par le système de fond (6) au moyen de l'unité de communication (20) du terminal mobile (4).

12. Procédé selon l'une des revendications précédentes, **caractérisé en ce qu'**au moins une identification, qui caractérise le terminal mobile (4) et / ou le module d'abonné (24), est transmise au système de fond (6) en commun avec la demande du jeu d'instructions de commande.

13. Procédé selon l'une des revendications précédentes, **caractérisé en ce qu'**au moins une identification, qui caractérise le programme pouvant être exécuté par le terminal mobile (4) est transmise au système de fond (6).

14. Procédé selon l'une des revendications précédentes, **caractérisé en ce que** le système de fond (6) reçoit la demande du jeu d'instructions de commande et communique en réponse le jeu d'instructions de commande au terminal mobile (4).

15. Dispositif selon l'une des revendications précédentes, **caractérisé en ce que** le système de fond (6) évalue l'identification, qui caractérise le terminal mobile (4) et / ou le module d'abonné (24), et sélectionne, en fonction du résultat de l'évaluation, un jeu d'instructions de commande à partir d'un choix de jeux d'instructions de commande, pour le transmettre au terminal mobile (4).

16. Procédé selon l'une des revendications précédentes, **caractérisé en ce que** le programme du module d'abonné (24), exécutable par le terminal mobile (4), est demandé par le système de fond (6), au moyen de l'unité de communication (20).

17. Procédé selon l'une des revendications précédentes, **caractérisé en ce que** le système de fond (6) reçoit la demande du programme exécutable et transmet au terminal mobile (4) ledit programme exécutable, en réponse à la demande.

18. Procédé selon l'une des revendications précédentes, **caractérisé en ce que** le système de fond (6) évalue l'identification, qui caractérise le programme exécutable par le terminal mobile (4), et, en fonction du résultat de l'évaluation, sélectionne, à partir d'un choix de jeu d'instructions de commande, un jeu d'instructions de commande pour le transmettre au terminal mobile (4).

19. Procédé selon l'une des revendications précédentes, **caractérisé en ce que** le terminal mobile (4) communique avec le système de fond (6), au moyen de l'unité de communication (20), par l'intermédiaire d'une interface radio ou d'une interface de câble.

20. Procédé selon l'une des revendications précédentes, **caractérisé en ce que** le terminal mobile (4), communique avec le système de fond (6), au moyen de l'unité de communication (20), par commutation de circuit ou par commutation de paquet.

21. Procédé selon l'une des revendications précédentes, **caractérisé en ce que** la demande du jeu d'instructions de commande et / ou du programme est démarrée par un signal de déclenchement, qui est lancé par le terminal mobile (4).

22. Procédé selon l'une des revendications précédentes, **caractérisé en ce que** le jeu d'instructions de commande est démarré dans le module d'abonné (24) par un signal de déclenchement, qui est déclenché dans le terminal mobile (4).

23. Procédé selon l'une des revendications précédentes, **caractérisé en ce que** le module d'abonné (24) est un module d'identification de l'abonné (SIM).

24. Procédé selon l'une des revendications précédentes, **caractérisé en ce que** l'interface (22) entre le module d'abonné (24) et le terminal mobile (4) est une interface standardisée.

25. Procédé selon l'une des revendications précédentes, **caractérisé en ce que** l'interface standardisée (22) est une interface boîte à outils du module d'identification de l'abonné.

26. Procédé pour la commande d'un terminal mobile (4) par
- réception d'un signal de demande pour un jeu d'instructions de commande, exécutables dans un module d'abonné (24) d'un terminal mobile (4), dans un système de fond (6).
- sélection d'un jeu d'instructions de commande mémorisé, pour le transmettre à un terminal mobile (4) dans le système de fond (6), et
- transmission du jeu d'instructions de commande sélectionné du système de fond (6) au terminal mobile (4),
**caractérisé en ce que**
- le jeu d'instructions de commande comprend une pile d'instructions, qui peuvent être traitées par le terminal mobile (4)
- le jeu d'instructions de commande comprend au moins des instructions pour l'activation de la frappe de touches du terminal mobile (4).

27. Procédé selon la revendication 26, **caractérisé en ce qu'**une identification, qui caractérise le terminal mobile (4) et / ou le module d'abonné (24), est reçue en commun avec le signal de demande, et qu'un jeu d'instructions de commande est sélectionné à partir d'un choix de jeux d'instructions de commande, en fonction de l'identification.

28. Terminal mobile (4) avec
- un module d'abonné (24),
- un processeur (16),
- une unité de communication (20), aménagée pour la réception d'un jeu d'instructions de commande,
- le 24
- le module d'abonné (24) étant aménagé pour la mémorisation du jeu d'instructions de commande, et
- le module d'abonné (24) étant aménagé pour l'activation de fonctions du terminal mobile (4) en fonction d'instructions du jeu d'instructions de commande, qui sont communiquées par l'intermédiaire d'une interface (22) entre le module d'abonné (24) et le terminal mobile (4),
**caractérisé en ce que**
- le jeu d'instructions de commande présente une pile d'instructions, qui peuvent être traitées par le terminal mobile (4),
- le jeu d'instructions de commande comprenant au moins des instructions pour l'activation d'instructions de frappe de touches du terminal mobile (4).

29. Système doté d'un terminal mobile (4) selon la revendication 28 et d'un système de fond (6) doté d'une mémoire (32), pour mémoriser au moins des jeux d'instructions de commande, et d'une mémoire (34) pour mémoriser au moins des états de fonctionnement du terminal mobile (4).

30. Programme informatique pour la commande d'un terminal mobile (4), avec des instructions pour
- la réception d'un jeu d'instructions de commande dans un terminal mobile (4), qui comprend un processeur (16), un module d'abonné (24) et une unité de communication (20),
- la mémorisation d'un jeu d'instructions de commande dans une mémoire (28) d'un module d'abonné (24), et
- l'activation de fonctions du terminal mobile (4) par le module d'abonné (24) en fonction d'instructions du jeu d'instructions de commande, qui sont communiquées par l'intermédiaire d'une interface (22) entre le module d'abonné (24) et le terminal mobile (4),
**caractérisé en ce que**
- le jeu d'instructions de commande présente une pile d'instructions, qui peuvent être traitées par le terminal mobile (4),
- le jeu d'instructions de commande présente au moins des instructions pour activer des instructions de frappe de touches du terminal mobile (4).
